(19) Europäisches Patentamt
European Patent Office
Office européen des brevets

(11) **EP 0 802 008 B1**

## (12) EUROPÄISCHE PATENTSCHRIFT

(45) Veröffentlichungstag und Bekanntmachung des Hinweises auf die Patenterteilung:
**02.05.2001 Patentblatt 2001/18**

(51) Int Cl.[7]: **B23H 7/06**

(21) Anmeldenummer: **97105135.4**

(22) Anmeldetag: **26.03.1997**

(54) **Verfahren zum elektroerosiven Schneiden, sowie hierfür geeignete Vorrichtung**

Method for wire electroerosion cutting, and apparatus therefor

Procédé pour le découpage par élecroérosion et dispositif approprié

(84) Benannte Vertragsstaaten:
**CH DE ES FR GB IT LI NL**

(30) Priorität: **10.04.1996 DE 19614133**

(43) Veröffentlichungstag der Anmeldung:
**22.10.1997 Patentblatt 1997/43**

(73) Patentinhaber: **AGIE SA**
**6616 Losone (CH)**

(72) Erfinder:
- **Beltrami, Ivano, Dr.**
  **6654 Cavigliano (CH)**
- **Prati, Antonio, Ing.El. ETH**
  **6600 Locarno (CH)**
- **Scuderi, Mario, Ing. El. ETH**
  **21016 Luino (IT)**

- **Nagel, Wolfgang, Ing.Mec.HTL**
  **6653 Verscio (CH)**

(74) Vertreter:
**von Samson-Himmelstjerna, Friedrich R., Dipl.-Phys. et al**
**SAMSON & PARTNER**
**Widenmayerstrasse 5**
**80538 München (DE)**

(56) Entgegenhaltungen:
**EP-A- 0 214 295      DE-A- 4 228 329**
**DE-A- 4 228 331**

- **PATENT ABSTRACTS OF JAPAN vol. 011, no. 057 (M-564), 21.Februar 1987 & JP 61 219528 A (FANUC LTD), 29.September 1986,**

**Beschreibung**

Die Erfindung betrifft ein Verfahren und eine Vorrichtung zum elektroerosiven Schneiden eines Werkstücks mittels eines Erodierdrahtes, der von wenigstens einem Drahtführungskopf mit Toroidführung geführt ist, jeweils gemäß den Oberbegriffen der Ansprüche 1 und 11.

Derartige Vorrichtungen mit einer Toroidführung sind beispielsweise aus der DE 42 28 331 A1 bekannt. Toroidführungen eignen sich in besonderer Weise für konische Schnitte. Die DE 42 28 331 A1 sieht dazu zwei Drahtführungen, je eine auf der Ober- und der Unterseite des Werkstücks vor, wobei auf jeder Seite des Werkstückes eine - im folgenden auch als Hauptführung bezeichnete - offene Drahtführung und eine Toroidführung angeordnet sind, wobei sich die Toroidführung zwischen der offenen Drahtführung und dem Werkstück befindet. Bei zylindrischen Schnitten, d.h. bei Schnitten ohne konische Neigung, aber auch bei Schnitten mit geringer konischer Neigung gewährleistet die offene Führung eine präzise Führung des Erodierdrahtes. Bei Schnitten mit größerer konischer Neigung übernimmt die Toroidführung die Führung des Drahtes. Durch diese geschlossene Toroidführung wird ein Herausrutschen des Erodierdrahtes aus der offenen Drahtführung auch bei großen Konikwinkeln vermieden.

Der Innendurchmesser des Toroids und die Anordnung von offener Drahtführung und Toroidführung sind bei der DE 42 28 331 A1 derart gewählt, daß der Draht beim zylindrischen bzw. beim konischen Schnitt bis etwa zwei Grad Neigung von den offenen Drahtführungen geführt wird, während er bei einem Konikwinkel von größer zwei Grad vom Toroid geführt wird. Es ist daher von größter Wichtigkeit, den Berührungspunkt zwischen Draht und Toroid zu kontrollieren. Dazu wird in der gattungsgemäßen DE 42 28 329 A1 vorgeschlagen, die Position des Erodierdrahtes innerhalb bzw. auf der Kontur des Toroids zu messen. Die durch den Kontakt des Erodierdrahtes mit der Toroidführung hervorgerufene Abweichung des Erodierdrahtes im Werkstück von dessen Sollposition im Werkstück wird über den am Toroiden gemessenen Korrekturwert korrigiert. Hierbei ist jedoch ein geeigneter Drahtlagesensor jeweils am oberen und unteren Toroid erforderlich.

Aus der JP-A-61219528 ist eine geschlossene Führung zum Führen des Erodierdrahtes bekannt. Die geschlossene Führung weist eine Bohrung zum Führen des Erodierdrahtes auf, deren Durchmesser im wesentlichen dem Erodierdrahtdurchmesser entspricht. Dadurch ist der Erodierdraht aber zu jedem Zeitpunkt im wesentlichen in Horizontalrichtung (bei vertikaler Drahtlaufrichtung) punktförmig festgelegt. Dies steht im Gegensatz zur Toroidführung, deren Öffnungsdurchmesser ein Vielfaches des Erodierdrahtdurchmessers sein kann und dadurch die punktförmige Festlegung in Horizontalrichtung nicht zeigt.

Die Erfindung zielt darauf ab, das elektroerosive Schneiden mit Toroidführungen zu vereinfachen.

Dieses Ziel wird bei einem gattungsgemäßen Verfahren dadurch erreicht, daß bei Kontakt des Erodierdrahtes mit der Toroidführung der Korrekturwert für die Lage des die Toroidführung umfassenden Drahtführungskopfes in Echtzeit berechnet wird (Anspruch 1). Ferner wird dieses Ziel bei einer gattungsgemäßen Vorrichtung erreicht durch ein Korrekturmittel zum Berechnen in Echtzeit des Korrekturwertes für die Lage des die Toroidführung umfassenden Drahtführungskopfes bei Kontakt des Erodierdrahtes mit der Toroidführung (Anspruch 11).

Das erfindungsgemäße Verfahren bzw. die erfindungsgemäße Vorrichtung kommt zwar mit einer Toroidführung aus. Die Erfindung bezieht sich jedoch auch auf Erosionsmaschinen mit mehreren, insbesondere zwei Toroidführungen. Bevorzugt ist jeder Toroidführung je eine Hauptführung zum Führen des Erodierdrahtes zugeordnet (Anspruch 2).

Der Erfindungsgegenstand gestattet, die genaue Lage der Hauptführungen bzgl. der Sollagen des Erodierdrahtes unabhängig davon, ob der Draht die Toroidführung(en) berührt oder nicht, unter Berücksichtigung der maßgebenden geometrischen und physikalischen Parameter zu berechnen und die Bahn der Hauptführungen herzuleiten (und durchzuführen).

Die Lage(n) der Hauptführung(en) und/oder Toroidführung(en) werden im Hinblick auf die gewünschte Kontur des Werkstükkes aus der Sollage des Erodierdrahtes ermittelt und in Echtzeit berechnet. Ein Interpolationssystem der Drahterosionsmaschine berechnet dabei sukzessiv, Schritt für Schritt, und in Echtzeit (z.B. jede Millisekunde) welche Position die Drahtführungsköpfe, die auch die Toroidführungen und/oder Hauptführungen enthalten, im Hinblick auf die programmierte Sollbahn gemäß der gewünschten Kontur einnehmen müssen. Diese Bahn kann als Folge von Punktpaaren definiert werden, wobei jeweils ein Punkt eines Punktpaares auf die obere Seite des Werkstücks und der andere Punkt auf die untere Seite des Werkstücks bezogen ist.

Zur Berechnung der Lage(n) der Hauptführung (en) und/oder Toroidführung(en) muß man, ausgehend von diesen Punktpaaren auf der Werkstückoberfläche, alle Effekte berücksichtigen, welche die Richtung des Drahtes beeinflussen, damit der Erodierdraht sich am Ein- und Ausgang der Werkstücks tatsächlich dort befindet, wo er sein soll.

Erfindungsgemäß kann auf die Verwendung von Drahtlagesensoren verzichtet werden, so daß sich dadurch der Aufbau einer Elektroerosionsmaschine vereinfacht, d.h. die Elektroerosionsmaschine kommt mit weniger Systemkomponenten aus. Sie wird dadurch nicht nur billiger, sondern auch weniger störanfällig.

Die oben genannte Lageberechnung berücksichtigt dabei vorteilhaft die räumliche Richtung des Erodierdrahtes, den Schleppfehler, die relative Schnittgeschwindigkeit an der oberen bzw. unteren Seite des Werkstücks, die Steifigkeit des Erodierdrahtes und/oder die Exzentrizität der Toroidführung in Bezug auf die Hauptführung (Anspruch 3).

Bei konischen Schnitten, bei denen der Konikwinkel einen bestimmten Wert, beispielsweise 2° überschreitet, wird der Erodierdraht von den Toroidführungen geführt, wobei sich je ein bestimmter Arbeitspunkt auf der Oberfläche der Toroidführungen ergibt. Der Begriff "Arbeitspunkt" bezeichnet im Zusammenhang mit der Erfindung bei einem (idealerweise) unendlich flexiblen Erodierdraht den geometrischen Mittelpunkt auf dem Kreisbogen - nachfolgend auch Berührungslinie genannt -, wo sich Toroidführung und Erodierdraht berühren. Bei einem Draht mit endlicher Flexibilität bzw. einer gewissen Steifigkeit schrumpft die Berührungslinie im Extremfall zu einem Berührungspunkt, welcher dann mit dem Arbeitspunkt zusammenfällt.

Ändert sich die räumliche Richtung des Erodierdrahtes, z.B. bei größer werdendem Konikwinkel, wandert dieser Arbeitspunkt - von oben auf die Toroidführung gesehen - auf der Oberfläche der Toroidführung nach außen. D.h. der Abstand zwischen Arbeitspunkt und Mittelpunkt der Toroidführung vergrößert sich. Bei kleiner werdendem Konikwinkel wandert der Arbeitspunkt entsprechend nach innen, d.h. der Abstand zwischen Arbeitspunkt und Mittelpunkt der Toroidführung verkleinert sich. Diese Verschiebung des Arbeitspunktes führt zu einer Lageverschiebung des Erodierdrahtes bezüglich der Toroidführung. Die Lageverschiebung führt dazu, daß die Lage(n) der Toroid- und/oder Hauptführung(en) bzw. des Drahtführungskopfes um einen entsprechenden Wert verschoben werden muß (müßte). Vorteilhafterweise berücksichtigt daher die Lageberechnung der Toroid- und/oder Hauptführung(en) die räumliche Richtung des Erodierdrahtes.

Eine weitere Lageverschiebung des Erodierdrahtes bezüglich der Toroidführung entsteht durch den sogenannten Schleppfehler. Der Schleppfehler entsteht durch eine Ausbauchung des Erodierdrahtes, wenn der Draht insbesondere infolge der Erodierkräfte und abhängig vom Spüldruck in Schnittrichtung gesehen rückwärts gedrückt wird. Auch der Schleppfehler bewirkt jeweils eine Verschiebung des Arbeitspunktes auf der Oberfläche der Toroidführung. Vorteilhafterweise wird daher der Schleppfehler bei o.g. Lageberechnung berücksichtigt. Liegt eine relative Schnittgeschwindigkeit an der oberen bzw. unteren Werkstückseite vor, d.h. unterscheiden sich die Schnittgeschwindigkeitsvektoren (Schnittgeschwindigkeit mit Betrag und Richtung), beispielsweise beim Übergang von einem zylindrischen in einen konischen Schnitt, entsteht je Toroidführung eine weitere Verschiebung des Arbeitspunktes auf deren Oberfläche. Auch diese Verschiebung des Arbeitspunktes bewirkt eine Verschiebung der Lage des Erodierdrahtes bezüglich der jeweiligen Toroidführung. Vorteilhafterweise wird daher diese relative Schnittgeschwindigkeit bei o.g. Lageberechnung berücksichtigt.

Wäre der Erodierdraht unendlich flexibel, so würde der Erodierdraht tangential die Toroidführung in einem ersten Punkt berühren, der Krümmung der Toroidführung bis zu einem zweiten Punkt folgen und dort wieder tangential die Toroidführung in Richtung des Eintrittspunktes des Erodierdrahtes in das Werkstück verlassen. Da nun aber der Erodierdraht eine bestimmte Steifigkeit aufweist, d.h. nicht unendlich flexibel ist, berührt der Erodierdraht, insbesondere wegen des kleinen Biegeradius der Toroidführung, die Toroidführung nur in dem oben genannten Arbeitspunkt, welcher sich auf der Toroidoberfläche in der Mitte zwischen dem ersten und dem zweiten Punkt befindet. Die Krümmung des Erodierdrahtes läßt sich vorteilhaft mit Hilfe der - aus der Statik bekannten - "Balkentheorie" berechnen. Da die Erodierdrahtumlenkung bei den in der Praxis verwendeten Drähten näherungsweise nur innerhalb einiger Millimeter um den Arbeitspunkt stattfindet, befindet sich der Draht beim Eintritt in das Werkstück wieder auf einer perfekten Geraden. Am Eintrittspunkt in das Werkstück entsteht jedoch ein erster Versatz. Dieser Versatz geht einher mit einem Fehler des Konikwinkels. Vorteilhafterweise wird daher die Steifigkeit des Erodierdrahtes bei o.g. Lageberechnung berücksichtigt.

Ein zweiter Versatz entsteht aufgrund der Exzentrizität einer Toroidführung zur zugeordneten Hauptführung, die beispielsweise durch mechanische Toleranzen oder aber auch dadurch entsteht, daß Erodierdrähte verschiedener Dicke verwendet werden und die Anordnungen von Toroidführungen und Hauptführungen nicht relativ zueinander verschiebbar sind. Aufgrund dieses zweiten Versatzes entsteht wiederum eine Verschiebung des Arbeitspunktes. Diese Verschiebung bewirkt eine Lageverschiebung des Erodierdrahtes bzgl. der Toroidführung. Vorteilhaft wird daher die Exzentrizität der Toroidführung in Bezug auf die Hauptführung bei o.g. Lageberechnung berücksichtigt.

Besonders bevorzugt wird das Vorliegen eines Kontaktes des Erodierdrahtes mit der Toroidführung und/oder der Ort des Kontaktes mittels der berechneten Lage(n) der Hauptführung und/oder der Toroidführung bestimmt (Anspruch 4). Aus der Kenntnis, ob bzw. wo der Erodierdraht die Toroidführung(en) berührt, läßt sich dann ermitteln, wo und wie der Erodierdraht entweder die Toroidführung oder die Hauptführung verläßt und wo der Draht in das Werkstück eintritt. Die Kenntnis derartiger Daten ermöglicht ein extrem genaues Erodieren.

Besonders vorteilhaft wird der Schleppfehler, insbesondere als Schleppfehlervektor, aus den momentanen der Erosion zugrundeliegenden Erosionsparametern, insbesondere dem Spüldruck, der Schnittgeschwindigkeit, den Erodierkräften, der Impulsfrequenz, dem Erosionsstrom und/oder der Erosionsspannung ermittelt (Anspruch 5). In Kenntnis der Erosionsparameter, die beispielsweise dadurch bekannt sein können, daß sie voreingestellt werden bzw. während des Erosionsvorgangs sukzessive neu bestimmt werden, oder aber auch gemessen werden können, kann der Schleppfehler ermittelt werden, ohne daß gesonderte Drahtlagesensoren verwendet werden müssen.

Besonders vorteilhaft werden die Lagen zweier Hauptführungen gegenüber der Sollposition des Erodierdrahtes oberhalb und unterhalb des Werkstückes unabhängig voneinander berechnet, um, insbesondere bei konischen Schnitten, einen - sich bei unterschiedlichen Schnittgeschwindigkeiten oberhalb und unterhalb des Werkstückes einstellenden - Unterschied der Schleppfehler oberhalb und unterhalb des Werkstückes zu berücksichtigen (Anspruch 6). Auf diese Weise können Abweichungen des Schleppfehlers oberhalb und unterhalb des Werkstücks, die bis zu +/- 15 % eines Schleppfehlers betragen können, berücksichtigt werden. Somit kann die Genauigkeit der Lageberechnungen weiter erhöht werden.

Besonders bevorzugt wird ein durch die Steifigkeit des Drahtes verursachter Konikfehler $\Delta\gamma$ mit der Formel

$$\Delta\gamma = \frac{\gamma - \gamma_{grenz}}{H} \sqrt{\frac{E \cdot I}{P}} \qquad \text{(Gl. 1)}$$

ermittelt, falls der Erodierdraht wenigstens eine Toroidführungen berührt, wobei $\gamma$ den Konikwinkel, $\gamma_{grenz}$ den Grenzwinkel zwischen einer Toroidführung und der zugeordneten Hauptführung, $H$ den vertikalen Abstand zwischen den Toroidführungen, $E$ den Elastizitätsmodul des Erodierdrahtes, $I$ das quadratische Flächenmoment des Erodierdrahtes und P die Erodierdrahtspannung angibt (Anspruch 7). Aus dem Konikfehler $\Delta\gamma$ kann auf den o.g. ersten Versatz geschlossen werden, der in x- und y-Komponenten zerlegt werden kann. Die Werte dieser Komponenten fließen in die Lageberechnung der Toroid- und/oder Hauptführungen ein.

Da es vorteilhaft ist, die Neigung des Drahtes auch im Fall kleiner Konikwinkel zu korrigieren, wird der durch die Steifigkeit des Drahtes verursachte Konikfehler $\Delta\gamma$ mit der Formel

$$\Delta\gamma = \frac{\gamma}{Q} \sqrt{\frac{E \cdot I}{P}} \qquad \text{(Gl. 2)}$$

ermittelt, falls der Erodierdraht keine Toroidführung berührt, wobei $\gamma$ den Konikwinkel, $Q$ den vertikalen Abstand zwischen den Hauptführungen, $E$ den Elastizitätsmodul des Erodierdrahtes, $I$ das quadratische Flächenmoment des Erodierdrahtes und $P$ die Erodierdrahtspannung angibt (Anspruch 8).

Bevorzugt wird die Steifigkeit des Erodierdrahtes ermittelt, indem ein bzw. mehrere gemessene(r) Konikwinkel mit einem bzw. mehreren eingestellten Konikwinkel(n) verglichen wird bzw. werden (Anspruch 9). Da die Steifigkeit bzw. der Elastizitätsmodul $E$ des Erodierdrahtes nicht immer genau bekannt ist, ist eine "Kalibrierung" obiger Formel sehr zweckmäßig. Diese Kalibrierung erfolgt, indem über einen bestimmten oder den ganzen Winkelbereich der reale Konikwinkel gegenüber dem eingestellten Konikwinkel mit Hilfe einer entsprechenden Kalibriervorrichtung vermessen wird. Aus diesen Meßdaten, die einmal bei einer Referenzmessung gewonnen werden können, läßt sich der Elastizitätsmodul $E$ jeweils zu einem bestimmten Drahttyp ermitteln. Dieser Wert kann grundsätzlich auch abhängig von den Biegedaten des Erodierdrahtes sein, wie beispielsweise Biegeradius und/oder dem Winkel der Biegung. Die erhaltenen Werte für den Elastizitätsmodul $E$ lassen sich dann bei der Berechnung des ersten Konikfehlers $\Delta\gamma$ berücksichtigen, indem die Werte für den Elastizitätsmodul $E$ aus einem geeigneten Speicher ausgelesen werden. Bevorzugt wird die Exzentrizität der Toroidführung in Bezug auf die ihr zugeordnete Hauptführung aus dem Gleichgewichtszustand der zur Toroidführung tangentialen Komponenten der Zugkräfte, welche den Erodierdraht in Drahtlängsrichtung beanspruchen, berechnet (Anspruch 10). Die Toroidführung kann - von oben betrachtet - vereinfachend als Kreis dargestellt werden. Auf die Toroidführung wirken tangential zu diesem Kreis tangentiale Kraftkomponenten der Zugkräfte, welche dem Erodierdraht vor und hinter der Toroidführung beanspruchen. Der Arbeitspunkt wird sich nun an der Stelle einstellen, wo die tangentialen Kraftkomponenten zueinander im Gleichgewicht stehen. Aufgrund dieser Bedingung kann der Arbeitspunkt in Kenntnis der Zugkräfte im Erodierdraht und der Exzentrizität berechnet werden. Auf diese Weise läßt sich dann im Hinblick auf die gewünschte Kontur des Werkstücks eine neue Lage der Toroidführung(en) berechnen.

Die bereits oben erwähnte Vorrichtung kann vorteilhaft ein Verfahren nach einer oder mehreren der oben erläuterten Ausgestaltungen durchführen Bezüglich einzelner Merkmale und Vorteile der Vorrichtung wird auf die obigen Erläuterungen zum Verfahren verwiesen, die sich vollinhaltlich auch auf die Vorrichtung in ihren verschiedenen Ausgestaltungen beziehen.

Die Erfindung wird nun anhand von Ausführungsbeispielen und der angefügten schematischen Zeichnung näher erläutert. In der Zeichnung zeigen:

Fig. 1      eine schematische Schnittdarstellung einer Drahterosionsanordnung mit offenen Drahtführungen, im folgenden Hauptführungen genannt, und Toroidführungen beim konischen Schnitt;

Fig. 2      eine schematische Darstellung zur Veranschaulichung des Schleppfehlers;

Fig. 3      eine schematische Darstellung zur Veranschaulichung einer Lagekorrektur eines Drahtführungskopfes;

Fig. 4      eine schematische Darstellung zur Veranschaulichung der durch die Steifigkeit des Drahtes verursachte Vergrößerung des Konikwinkels.

Fig. 5      eine schematische Darstellung zur Veranschaulichung des zweiten Versatzes aufgrund der Exzentrizität der Toroidführung in bezug auf die Hauptführung.

In der gesamten vorliegenden Beschreibung werden Ortsangaben, wie vor, hinter, oben, unten, rechts und links auf Drahterosionsmaschinen üblicher Arbeitsaufstellung bezogen und sind somit nicht einschränkend zu verstehen. Darüberhinaus werden Zahlenangaben "x" im Sinn von "wenigstens x" und nur vorzugsweise im Sinn von "genau x" verstanden.

In den Figuren tragen im wesentlichen funktionsgleiche Teile gleiche Bezugszeichen.

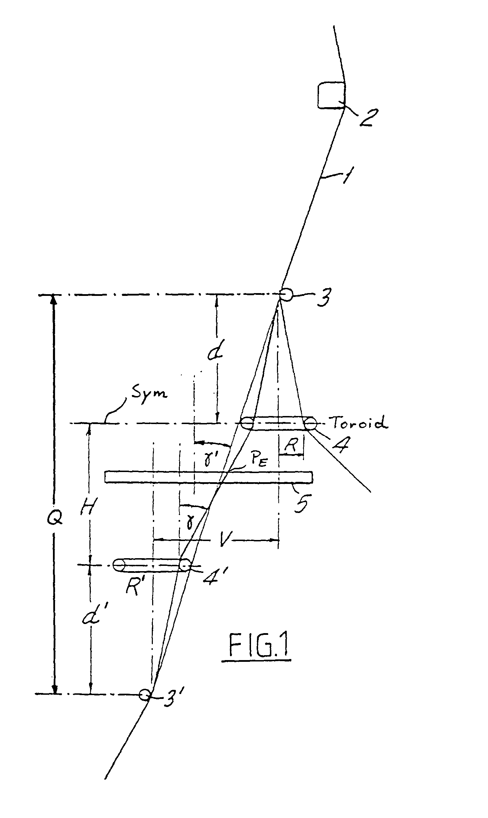

Fig. 1 beschränkt sich auf eine rein schematische Darstellung wesentlicher Teile einer Drahterosionsmaschine mit Toroidführungen. Ein Erodierdraht 1 wird zu einer - nicht dargestellten - Drahttransportvorrichtung von "oben" nach "unten" vorgespult. Eine Stromzuführung 2 dient zur Zuführung der von einem Generator der Drahterosionsmaschine abgegebenen elektrischen Impulse. Dabei sorgt die Stromzuführung 2 auch für eine gewisse Vorspannung des Erodierdrahtes 1. Unterhalb der Stromzuführung 2 ist eine obere offene Drahtführung 3 - auch obere Hauptführung genannt - angeordnet. Die obere offene Drahtführung 3 ist V-förmig ausgebildet, so daß der Erodierdraht 1 in seiner Ruhelage im "tiefsten Punkt" des "V" liegt. Unterhalb der oberen offenen Drahtführung 3 ist eine geschlossene Drahtführung, nämlich eine obere Toroidführung 4, angeordnet. Die Führung des Erodierdrahtes 1 erfolgt somit durch die Anordnung offene Drahtführung 3 mit Toroidführung 4.

Unterhalb der Toroidführung 4 befindet sich das Werkstück 5 und wiederum unterhalb des Werkstücks 5 befindet sich eine untere Toroidführung 4', welche horizontal gegenüber der oberen Toroidführung 4 um die Länge V verschoben ist. Unterhalb der unteren Toroidführung 4' befindet sich die untere offene Drahtführung 3' im vertikalen Abstand d'. Die obere offene Drahtführung 3 befindet relativ sich zur oberen Toroidführung 4 in einem Abstand d. Der innere Radius der oberen Toroidführung beträgt R und der innere Radius der unteren Toroidführung beträgt R'. Der Abstand zwischen oberer offener Drahtführung 3 und unterer offener Drahtführung 3' beträgt Q.

Bei Schnitten mit einem Neigungs- bzw. Konikwinkel $\gamma' < \gamma_{grenz}$ zur Senkrechten übernimmt die offene Drahtführung 3 die Führung des Erodierdrahtes 1. Der Winkel $\gamma_{grenz}$ beträgt beispielsweise 2°. Bei derart kleinen Konikwinkeln $\gamma'$ fällt der Erodierdraht 1 wegen seiner Vorspannung nicht aus der offenen Drahtführung 3 heraus. Bei größeren Konikwinkeln $\gamma$ übernimmt dagegen die Toroidführung 4 die Drahtführung.

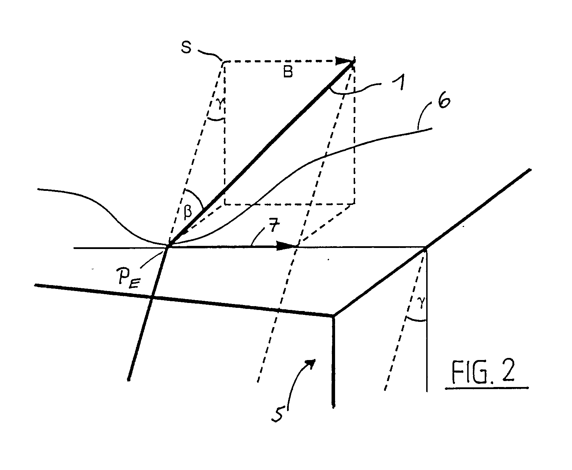

Fig. 2 zeigt den ersten Effekt, der bei der Lagekorrektur eines Drahtführungskopfes berücksichtigt werden muß. Es handelt sich hierbei um den Schleppfehler B, der sich bei einem flexiblen Erodierdraht 1 immer bei der Bearbeitung eines Werkstücks 5 einstellt. Der Schleppfehler B äußert sich in einer Ausbauchung des Erodierdrahtes 1 entgegen der Schnittrichtung, wobei der Erodierdraht 1 infolge der Erodierkräfte und vom Spüldruck rückwärts gedrückt wird.

In Fig. 2 ist die zu schneidende Schnittkontur 6 eines Werkstücks 5 dargestellt. Der Punkt $P_E$ kennzeichnet den Punkt, an dem der Erodierdraht in das Werkstück eintritt. Entsprechend kennzeichnet der Pfeil 7 die momentane Schnittrichtung eines konischen Schnittes mit dem Konikwinkel $\gamma$. Der Schleppfehler B läßt sich auch durch den Schleppwinkel $\beta$ charakterisieren. Der Schleppwinkel $\beta$ ist der Winkel zwischen der Geraden, die durch den Erodierdraht 1 im Werkstück beschrieben wird zur Geraden, die durch den Erodierdraht 1 außerhalb des Werkstücks beschrieben wird.

Damit der Erodierdraht 1 den gewünschten Konturen auf der oberen und der unteren Seite des Werkstücks 5 folgt, muß zur Soll-Position S als Korrekturwert der Schleppfehler B zur Berücksichtigung des Schleppwinkels $\beta$ vektoriell zur Schnittrichtung 7 hinzugefügt werden. Der Schleppfehler B bzw. Schleppwinkel $\beta$ läßt sich aus den momentanen Erosionsparametern und aus der vorbekannten Geometrie der zu schneidenden Kontur berechnen. Betrag und Richtung des Schleppfehlervektors werden separat berechnet. Vorzugsweise erfolgt die Berechnung des Vektorbetrages aus dem momentanen Arbeitsstrom und der momentanen Arbeitsspannung und aus dem Momentandruck der den Schneiddraht umströmenden Spülung, während die Vektorrichtung aus dem Winkel berechnet wird, der sich zwischen der Richtung des Schleppfehlers am Ende eines Bahnelementes der Umrißkurve und der Richtung des als nächstes zu schneidenden Bahnelementes der Umrißkurve ergibt. Die hierbei anzuwendenden Rechenformeln enthalten neben den genannten Größen nur solche Parameter, die von fixen Parametern der Maschine und bekannten Parametern des Werkstückes abhängen und experimentell oder aus diesen Parametern rechnerisch vorbestimmt und in Vorbereitung der Werkstückbearbeitung eingegeben werden können, z. B. in die Software für die computerisierte numerische Steuerung (CNC) der Drahterosionsmaschine.

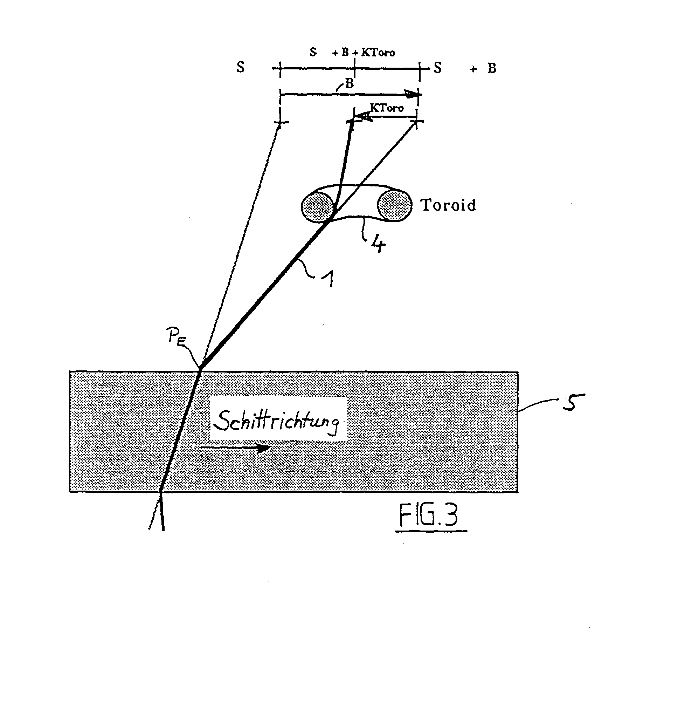

Nachdem die korrekte Neigung des Erodierdrahtes bestimmt wurde, muß festgestellt werden, ob der Erodierdraht 1 die Toroidführung 3 bzw. 3' berührt oder nicht. Bei Berührung des Erodierdrahtes 1 muß gemäß Fig. 3 ein Korrekturwert $K_{toro}$ gefunden werden, welcher zu den bis jetzt errechneten Steuerpositionen der Drahtführungen hinzugefügt werden muß. Für die Berechnung des Korrekturwertes $K_{toro}$ muß - außer den Geometrieparametern der Toroidführung 4 - der Drahtkrümmungsradius an der Toroidführung 4, sowie deren Exzentrizität in bezug auf die entsprechende Hauptführung 3 berücksichtigt werden.

Gemäß Fig. 3 ist die Soll-Position auf die Hauptführung 3 (nicht dargestellt) bezogen. Folglich ergibt sich die Soll-Position S der Hauptführung 3 aus dem Schleppfehler B sowie dem Korrekturwert $K_{toro}$.

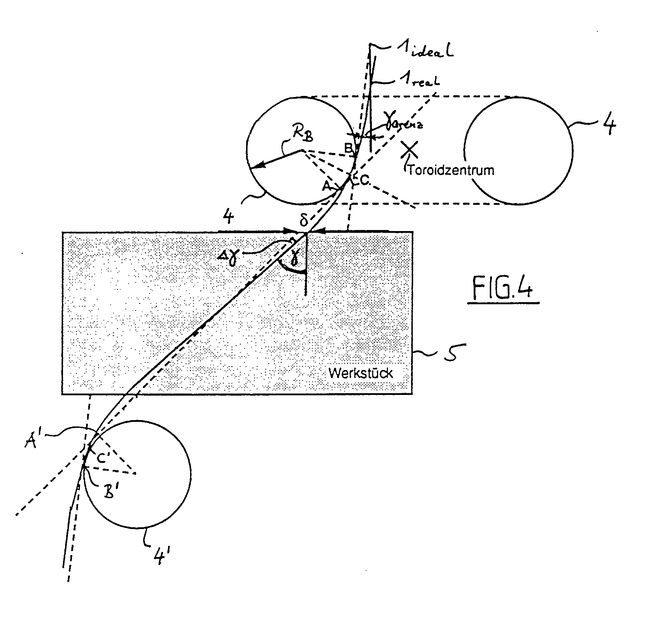

Fig. 4 zeigt zwar lediglich die obere Toroidführung 4 sowie die entsprechenden Korrekturwerte, jedoch ist es selbstverständlich, daß auf der unteren Seite des Werkstücks 5 wiederum die untere Toroidführung 4' mit entsprechenden Korrekturwerten entsprechend angeordnet eingezeichnet sein könnte.

Die Wirkung dieses oben beschriebenen ersten Versatzes ist in Fig. 4 ersichtlich: aus Symmetriegründen wird die reale Neigung um den Winkel $\Delta\gamma$ größer, der sich mit Hilfe der o.g. Formel (Gl. 1) berechnen läßt.

Auch im Fall kleiner Konikwinkel muß die Neigung des Drahtes korrigiert werden und zwar mit der ähnlichen, o.g. Formel (Gl. 2).

Fig. 4 zeigt einen schematischen seitlichen Schnitt durch die Toroidführungen 4, 4' und das Werkstück 5. Ein idealer Erodierdraht $1_{ideal}$, der hier zusätzlich idealisiert als Linie - d.h. mit punktförmigem Querschnitt - dargestellt ist, würde, wie in Fig. 3 gezeigt, entlang der gestrichelten Linie verlaufen. Tatsächlich besitzt der Erodierdraht $1_{real}$ jedoch eine bestimmte Steifigkeit. Dieser reale Verlauf ist in Fig. 4 mittels der durchgezogene Linie dargestellt. Die Steifigkeit hat zur Folge, daß der Erodierdraht $1_{real}$, insbesondere wegen des kleinen Biegeradius $R_B$ der Toroidführung 4, die Toroidführung nur in einem Punkt C berührt. Dieser (auch als Arbeitspunkt bezeichneter Punkt) befindet sich genau in der Mitte des Kreisbogens, der die Punkte A und B verbindet. Der Radius dieses Kreisbogens ist gleich dem Biegeradius der Toroidführung. Der reale Erodierdraht $1_{real}$ erhält somit gegenüber dem idealen Erodierdraht $1_{ideal}$ eine neue Krümmung, die sich mit Hilfe der sogenannten "Balkentheorie" berechnen läßt. Bei allen tatsächlich verwendeten Erodierdrähten findet die Drahtumlenkung innerhalb einiger Millimeter um den Berührungspunkt C statt, so daß sich der Erodierdraht $1_{real}$ beim Eintritt in das Werkstück 5 wieder auf einer perfekten Geraden, nämlich der für den idealen Erodierdrahtes $1_{ideal}$ gestrichelten dargestellten Linie, befindet. Der Erodierdraht $1_{real}$ erfährt jedoch einen ersten Versatz $\delta$ gegenüber der Ideallinie, die durch die Gerade beschrieben wird, welche die Punkte A und A' verbindet. Dieser erste Versatz $\delta$ bewirkt einen - als Konikfehler $\Delta\gamma$ bezeichneten - Fehler des Konikwinkels. Die Gerade durch die Punkte A und A' steht senkrecht auf den Biegeradien $R_B$ zu den Punkten A bzw. A'.

Wenngleich Fig. 4 die geometrische Anordnung detailliert nur für die obere Toroidführung 4 zeigt, gelten die vorliegenden Ausführungen auch für die untere Toroidführung 4'.

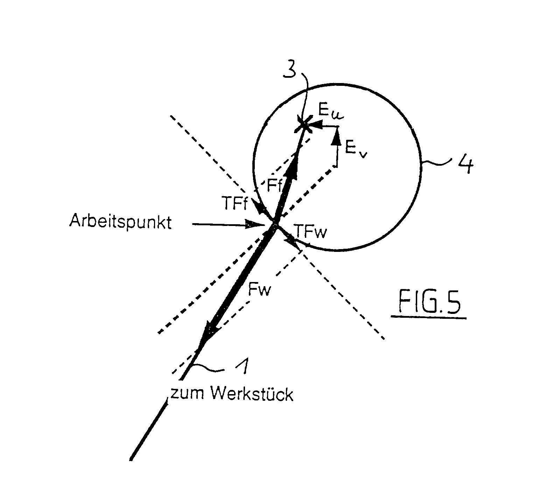

Schließlich muß noch ein weiterer Effekt berücksichtigt werden, der sich infolge der Exzentrizität $E_u$, $E_v$ der Toroidführungen 4 in bezug auf die zugeordneten Hauptführungen 3 einstellt. Fig. 5 zeigt - von oben gesehen - schematisch die idealisiert als Kreis dargestellte Toroidführung 4, die idealisiert als Kreuz dargestellte obere Hauptführung 3, den Erodierdraht 1, sowie die auf den Erodierdraht 1 wirkenden Kräfte $F_w$, $F_f$, $TF_w$ und $TF_f$. Die Kraft $F_w$ kennzeichnet die Kraft, welche den Erodierdraht 1 in Richtung des Werkstückes 5 zieht. Die Kraft $F_f$ kennzeichnet die Kraft, welche den Erodierdraht 1 in Richtung der oberen Hauptführung 3 zieht. $TF_w$ kennzeichnet die Kraft, die bei einer Kräftezerlegung der Kraft $F_w$ gebildet werden kann und tangential zum Kreis der Toroidführung 4 wirkt. Entsprechend kennzeichnet $TF_f$ die Kraft, die bei einer Kräftezerlegung der Kraft $F_f$ tangential zu dem Kreis der Toroidführung 4 wirkt.

Fig. 5 zeigt, daß sich der Arbeitspunkt des Erodierdrahtes 1 dort befindet, wo die tangentialen Kraftkomponenten $TF_f$ und $TF_w$ zueinander im Gleichgewicht stehen. Bei Kenntnis der Exzentrizität $E_x$, $E_y$, sowie der in dem Draht wirkenden Kräfte $F_f$ und $F_w$ läßt sich somit analytisch der Ort des sich einstellenden Arbeitspunktes ermitteln.

Wenngleich Fig. 5 nur die obere Toroidführung 4 bzw. obere Hauptführung 3 schematisch zeigt, gelten die vorliegenden Ausführungen entsprechend für die untere Toroidführung 4' bzw. Hauptführung 3'.

Die vorstehend beschriebenen Effekte lassen sich einer nach dem anderen in Echtzeit berechnen bis zur endgültigen Bestimmung der Lagen der Hauptführungen und/oder Toroidführungen. Wichtig ist jedoch die logische Reihenfolge, mit welcher die Verschiebungen berechnet werden: Wegen der Nicht-linearität einiger Effekte muß die Berechnung jeder Verschiebung die durch die früheren Effekte verursachten Verschiebungen berücksichtigen.

Aus Gründen der Klarheit berücksichtigen nicht alle Figuren jeweils alle Effekte. Es ist jedoch hervorzustellen, daß diese, auf einzelne Effekte gerichtete Darstellung der Figuren keine Einschränkung der Erfindung bedeutet.

## Patentansprüche

**1.** Verfahren zum elektroerosiven Schneiden eines Werkstückes (5) mittels eines Erodierdrahtes (1), der von wenigstens einem Drahtführungskopf mit Toroidführung (4; 4') geführt ist, bei welchem:

    a) die Lage des Drahtführungskopfes (4; 4') unter Berücksichtigung der Geometrie einer zu schneidenden Kontur und der momentanen Erosionsparameter in Echtzeit so berechnet wird, daß der Erodierdraht (1) im Werkstück seine Sollposition einnimmt,

    b) bei Kontakt des Erodierdrahts (1) mit der Toroidführung (4; 4') ein Korrekturwert für die Lage des Drahtführungskopfes ermittelt wird, und

    c) die unter (a) berechnete Lage des Drahtführungskopfes unter Berücksichtigung des unter (b) ermittelten Korrekturwertes eingestellt wird, dadurch gekennzeichnet, daß

    b1) der unter (b) zu ermittelnde Korrekturwert in Echtzeit berechnet wird.

**2.** Verfahren nach Anspruch 1, dadurch gekennzeichnet, daß der Erodierdraht (1) zusätzlich von wenigstens einer der wenigstens einen Toroidführung (4; 4') zugeordneten Hauptführung (3; 3') geführt wird.

**3.** Verfahren nach Anspruch 1 oder 2, dadurch gekennzeichnet, daß beim Berechnen

a) die räumliche Richtung des Erodierdrahtes (1),
b) der Schleppfehler (B),
c) die relative Schnittgeschwindigkeit an der oberen bzw. unteren Seite des Werkstücks (5),
d) die Steifigkeit des Erodierdrahtes (1) und/oder
e) die Exzentrizität der Toroidführung (4; 4') in Bezug auf die Hauptführung (3; 3')

berücksichtigt wird/werden.

**4.** Verfahren nach Anspruch 1, 2 oder 3, dadurch gekennzeichnet, daß das Vorliegen eines Kontaktes des Erodierdrahtes (1) mit der Toroidführung (4; 4') und/oder der Ort des Kontaktes mittels der berechneten Lage(n) der Hauptführung (3; 3') und/oder der Toroidführung (4; 4') bestimmt wird.

**5.** Verfahren nach einem der vorstehenden Ansprüche, dadurch gekennzeichnet, daß der Schleppfehler (B), insbesondere als Schleppfehlervektor, aus den momentanen der Erosion zugrundeliegenden Erosionsparameter, insbesondere dem Spüldruck, der Schnittgeschwindigkeit, den Erodierkräften, der Impulsfrequenz, dem Erosionsstrom und/oder der Erosionsspannung ermittelt wird.

**6.** Verfahren nach einem der Ansprüche 2 bis 5, dadurch gekennzeichnet, daß die Lagen zweier Hauptführungen (3, 3') gegenüber der Sollposition des Erodierdrahtes (1) oberhalb und unterhalb des Werkstückes (5) unabhängig voneinander berechnet werden, um, insbesondere bei konischen Schnitten, einen - sich bei unterschiedlichen Schnittgeschwindigkeiten oberhalb und unterhalb des Werkstückes (5) einstellenden - Unterschied der Schleppfehler (B) oberhalb und unterhalb des Werkstückes (5) zu berücksichtigen.

**7.** Verfahren nach einem der Ansprüche 2 bis 6, dadurch gekennzeichnet, daß ein durch die Steifigkeit des Drahtes verursachter Konikfehler $\Delta\gamma$ mit der Formel

$$\Delta\gamma = \frac{\gamma - \gamma_{grenz}}{H}\sqrt{\frac{E\cdot I}{P}}$$

ermittelt wird, falls der Erodierdraht (1) wenigstens eine Toroidführungen (4; 4') berührt, wobei

- $\gamma$ den Konikwinkel,
- $\gamma_{grenz}$ den Grenzwinkel zwischen einer Toroidführung (4; 4') und der zugeordneten Hauptführung (3; 3'),
- $H$ den vertikalen Abstand zwischen den Toroidführungen (4; 4'),
- $E$ den Elastizitätsmodul des Erodierdrahtes (1),
- $I$ das quadratische Flächenmoment des Erodierdrahtes (1) und
- $P$ die Erodierdrahtspannung

angibt.

**8.** Verfahren nach einem der Ansprüche 2 bis 6, dadurch gekennzeichnet, daß der durch die Steifigkeit des Drahtes verursachte Konikfehler $\Delta\gamma$ mit der Formel

$$\Delta\gamma = \frac{\gamma}{Q}\sqrt{\frac{E\cdot I}{P}}$$

ermittelt wird, falls der Erodierdraht (1) keine Toroidführung (4; 4') berührt, wobei

- $\gamma$ den Konikwinkel,
- $Q$ den vertikalen Abstand zwischen den Hauptführungen (3; 3'),
- $E$ den Elastizitätsmodul des Erodierdrahtes (1),
- $I$ das quadratische Flächenmoment des Erodierdrahtes (1) und
- $P$ die Erodierdrahtspannung

angibt.

**9.** Verfahren nach einem der vorstehenden Ansprüche, dadurch gekennzeichnet, daß die Steifigkeit des Erodierdrahtes (1) ermittelt wird, indem ein bzw. mehrere gemessene(r) Konikwinkel mit einem bzw. mehreren eingestellten Konikwinkel(n) verglichen wird bzw. werden.

**10.** Verfahren nach einem der Ansprüche 2 bis 8, dadurch gekennzeichnet, daß die Exzentrizität der Toroidführung (4; 4') in Bezug auf die ihr zugeordnete Hauptführung (3; 3') aus dem Gleichgewichtszustand der zur Toroidführung (4; 4') tangentialen Komponenten der Zugkräfte ($TF_w$, $TF_f$), welche den Erodierdraht (1) in Drahtlängsrichtung beanspruchen, berechnet wird.

**11.** Vorrichtung zum elektroerosiven Schneiden eines Werkstückes (5) mit:

a) einem Drahtführungskopf, der eine Toroidführung (4; 4') zum Führen eines Erodierdrahtes (1) umfaßt

b) Berechnungsmittel zum Berechnen der Lage des Drahtführungskopfes unter Berücksichtigung der Geometrie einer zu schneidenden Kontur und der momentanen Erosionsparameter in Echtzeit derart, daß der Erodierdraht (1) im Werkstück seine Sollposition einnimmt;

c) Korrekturmittel zum Erteilen eines Korrekturwertes für die Lage des Drahtführungskopfes bei Kontakt des Erodierdrahtes (1) mit der Toroidführung (4; 4'); und

d) Mitteln zum Einstellen der von den Berechnungsmitteln berechneten Lage des Drahtführungskopfes unter Berücksichtigung des von den Korrekturmitteln ermittelten Korrekturwertes;

dadurch gekennzeichnet, daß:

cl) die Korrekturmittel derart ausgestaltet sind, daß sie den zu ermittelnden Korrekturwert in Echtzeit berechnen.

**Claims**

1. Process for the electro-erosive cutting of a workpiece (5) by means of an erosion wire (1) which is guided by at least one wire guide head with a toroidal guide (4; 4'), in which:

   a) the position of the wire guide head (4; 4') is calculated taking into account the geometry of a contour to be cut and the momentary erosion parameters in such a way that the erosion wire (1) adopts its nominal position in the workpiece,
   b) when the erosion wire (1) is in contact with the toroidal guide (4; 4') a correction value for the position of the wire guide head is determined, and
   c) the position of the wire guide head calculated as under (a) is adjusted taking into account the correction value determined under (b),
   **characterised in that**
   b1) the correction value to be determined under (b) is calculated in real time.

2. Process according to Claim 1,
   **characterised in that**
   in addition, the erosion wire (1) is guided by at least one main guide (3; 3') associated with at least one toroidal guide (4; 4').

3. Process according to Claims 1 or 2,
   **characterised in that** in the calculation

   a) the spatial direction of the erosion wire (1),
   b) the lag error B,
   c) the relative cutting speed at the upper and lower side of the workpiece (5),

   d) the rigidity of the erosion wire (1), and/or
   e) the eccentricity of the toroidal guide (4; 4') relative to the main guide (3; 3') is/are taken into account.

4. Process according to Claims 1, 2 or 3,
   **characterised in that**
   the occurrence of contact between the erosion wire (1) and the toroidal guide (4; 4') and/or the location of the said contact is determined by virtue of the calculated position(s) of the main guide (3; 3') and/or the toroidal guide (4; 4').

5. Process according to any of the preceding Claims,
   **characterised in that**
   the lag error (B), in particular in the form of a lag error vector, is determined from the momentary erosion parameters that govern the erosion, in particular the flushing pressure, the cutting speed, the erosion forces, the pulse frequency, the erosion current and/or the erosion voltage.

6. Process according to any of Claims 2 to 5,
   **characterised in that**
   the positions of two main guides (3; 3') compared with the nominal position of the erosion wire (1) above and below the workpiece (5) are calculated independently of one another, so that, especially in the case of conical cutting, a difference in the lag error (B) at the top and bottom of the workpiece (5) - arising when the cutting speeds at the top and bottom of the workpiece (5) are different - is taken into account.

7. Process according to any of Claims 2 to 6,
   **characterised in that**
   a conicity error $\Delta\gamma$ caused by the rigidity of the wire is determined using the formula:

$$\Delta\gamma = \frac{\gamma - \gamma_{grenz}}{H} \sqrt{\frac{E \cdot I}{P}}$$

when the erosion wire (1) is in contact with at least one of the toroidal guides (4; 4'), where:

   - $\gamma$ is the cone angle,
   - $\gamma_{grenz}$ is the limit angle between a toroidal guide (4; 4') and the associated main guide (3; 3'),
   - H is the vertical distance between the toroidal guides (4; 4'),
   - E is the Young's modulus of the erosion wire (1),
   - I is the quadratic area moment of the erosion wire (1), and
   - P is the erosion wire tension.

8. Process according to any of Claims 2 to 6,
   **characterised in that**

the conicity error $\Delta\gamma$ caused by the rigidity of the wire is determined using the formula:

$$\Delta\gamma = \frac{\gamma}{Q}\sqrt{\frac{E \cdot I}{P}}$$

when the erosion wire (1) is not in contact with a toroidal guides (4; 4'), where:

- $\gamma$ is the cone angle,
- Q is the vertical distance between the main guides (3; 3'),
- E is the Young's modulus of the erosion wire (1),
- I is the quadratic area moment of the erosion wire (1), and
- P is the erosion wire tension.

9. Process according to any of the preceding Claims, **characterised in that** the rigidity of the erosion wire (1) is determined by comparing one or more measured cone angle(s) with one or more set cone angle(s).

10. Process according to any of Claims 2 to 8, **characterised in that** the eccentricity of the toroidal guide (4; 4') relative to the associated main guide (3; 3') is calculated from the equilibrium condition of the components ($TF_w$, $TF_f$) tangential to the toroidal guide (4; 4') of the tensile forces acting on the erosion wire (1) along its longitudinal direction.

11. Device for the electro-erosive cutting of a workpiece (5), having:

a) a wire guide head comprising a toroidal guide (4; 4') to guide the erosion wire (1);
b) calculation means for calculating the position of the wire guide head in a manner which takes into account the geometry of a contour to be cut and the momentary erosion parameters in real time, such that the erosion wire (1) will adopt its nominal position in the workpiece;
c) correction means to establish a correction value for the position of the wire guide head when the erosion wire (1) is in contact with the toroidal guide (4; 4'); and
d) means for adjusting the position of the wire guide head calculated by the calculation means taking into account the correction value determined by the correction means;
**characterised in that**
c1) the correction means are designed such that they calculate the correction value to be determined in real time.

**Revendications**

1. Procédé pour le découpage par électroérosion d'une pièce à usiner (5) à l'aide d'un fil d'érosion (1), qui est guidé par au moins une tête de guidage du fil comportant un guide toroïdal (4 ; 4'), selon lequel :

a) la position de la tête (4 ; 4') de guidage du fil est calculée en tenant compte de la géométrie d'un contour à découper et des paramètres instantanés d'érosion en temps réel de telle sorte que le fil d'érosion (1) prend dans la pièce à usiner une position de consigne,

b) lors du contact du fil d'érosion (1) avec le guide toroïdal (4 ; 4'), une valeur de correction est déterminée pour la position de la tête de guidage du fil, et

c) la position, calculée en (a), de la tête de guidage du fil est réglée en tenant compte de la valeur de correction déterminée en (b), caractérisé en ce que

b1) la valeur de correction devant être déterminée en (b) est calculée en temps réel.

2. Procédé selon la revendication 1, caractérisé en ce que le fil d'érosion (1) est guidé en supplément par au moins un guide principal (3 ; 3') associé à au moins un guide toroïdal (4 ; 4').

3. Procédé selon la revendication 1 ou 2, caractérisé en ce que lors du calcul, on prend en compte

a) la direction spatiale du fil d'érosion (1),

b) l'erreur de traînage (B),

c) la vitesse de coupe relative au niveau de la face supérieure et de la face intérieure de l'outil (5),

d) la rigidité du fil d'érosion (1), et/ou

e) l'excentricité du guide toroïdal (4 ; 4') par rapport au guide principal (3 ; 3').

4. Procédé selon la revendication 1, 2 ou 3, caractérisé en ce que la présence d'un contact du fil d'érosion (1) avec le guide toroïdal (4 ; 4') et/ou le lieu du contact est déterminée à l'aide de la ou des positions calculées du guide principal (3 ; 3') et/ou du guide toroïdal (4 ; 4').

5. Procédé selon l'une des revendications précédentes, caractérisé en ce que l'erreur de traînage (B) est déterminé, notamment en tant que vecteur d'erreur de traînage, à partir des paramètres d'érosion instantanés, pris comme base pour l'érosion, notamment la pression de balayage, la vitesse de coupe, les forces d'érosion, la fréquence d'impulsions, le courant d'érosion et/ou la tension d'érosion.

6. Procédé selon l'une des revendications 2 à 5, caractérisé en ce qu'on calcule les positions de deux guides principaux (3,3') par rapport à la position de consigne du fil d'érosion (1) au-dessus et au-dessous de la pièce à usiner (5) indépendamment l'une de l'autre de manière à prendre en compte, notamment dans le cas de coupes coniques, une différence des erreurs de traînage (B) au-dessus et au-dessous de la pièce à usiner (5) - qui s'établit dans le cas de vitesses de coupe différentes au-dessus et au-dessous de la pièce à usiner (5).

7. Procédé selon l'une des revendications 2 à 6, caractérisé en ce qu'une erreur de conique ($\Delta\gamma$), qui est provoquée par la rigidité du fil, est déterminé au moyen de la formule

$$\Delta\gamma = \frac{\gamma - \gamma_{limite}}{H}\sqrt{\frac{E \cdot I}{P}}$$

dans le cas où le fil d'érosion (1) touche au moins l'un des guides toroïdaux (4; 4'),

- $\gamma$ désignant l'angle de la conique,

- $\gamma$ limite désignant l'angle limite entre un guide toroïdal (4 ; 4') et le guide principal associé (3 ; 3'),

- H désignant la distance verticale entre les guides toroïdaux (4 ; 4'),

- E désignant le module d'élasticité du fil d'érosion (2),

- I désignant le moment de surface quadratique du fil d'érosion (1), et

- P désignant la tension du fil d'érosion.

8. Procédé selon l'une des revendications 2 à 6, caractérisé en ce que l'erreur de conique $\Delta\gamma$ provoquée par la rigidité du fil, est déterminée conformément à la formule

$$\Delta\gamma = \frac{\gamma}{Q}\sqrt{\frac{E \cdot I}{P}}$$

dans le cas où le fil d'érosion (1) ne touche aucun guide toroïdal (4,4'),

- $\gamma$ désignant l'angle de la conique,

- Q désignant la distance verticale entre les guides principaux (3 ; 3'),

- E désignant le module d'élasticité du fil d'érosion (1);

- I désignant le moment de surface quadratique du fil d'érosion (1), et

- P désignant la tension du fil d'érosion.

9. Procédé selon l'une des revendications précédentes, caractérisé en ce qu'on détermine la rigidité du fil d'érosion (1) en comparant un ou plusieurs angles de conique mesurés à un ou plusieurs angles de conique réglés.

10. Procédé selon l'une des revendications 2 à 8, caractérisé en ce que l'excentricité du guide toroïdal (4; 4') par rapport au guide principal (3 ; 3') qui lui est associé, est calculée à partir de l'état d'équilibre des composantes, qui sont tangentielles par rapport au guide toroïdal (4 ; 4'), d'une force de traction ($TF_W$, $TF_f$), qui sollicite le fil d'érosion (1) dans la direction longitudinale du fil.

11. Dispositif pour le découpage par électroérosion d'une pièce à usiner (5), comportant :

a) une tête de guidage du fil, qui comprend un guide toroïdal (4 ; 4') servant à guider un fil d'érosion (1),

b) des moyens de calcul pour calculer la position de la tête de guidage du fil en tenant compte de la géométrie d'un contour à découper et des paramètres instantanés d'érosion en temps réel, de telle sorte que le fil d'érosion (1) prend dans la pièce à usiner une position de consigne ;

c) des moyens de correction pour obtenir une valeur de correction pour la position de la tête de guidage du fil lors du contact du fil d'érosion (1) avec le guide toroïdal (4 ; 4') ; et

d) des moyens pour régler la position, calculée par les moyens de calcul, de la tête de guidage du fil en tenant compte de la valeur de correction déterminée par les moyens de correction ; caractérisé en ce que

c1) les moyens de correction sont agencés de telle sorte qu'ils calculent en temps réel la valeur de correction à déterminer.

FIG.1

FIG. 2

S. + B + KToro

S     S + B

B

KToro

Toroid

4

1

$P_E$

Schittrichtung

5

FIG.3

FIG.4

FIG.5